# EUROPEAN PATENT SPECIFICATION

(11) **EP 3 754 376 B1**
(45) Date of publication and mention of the grant of the patent: **04.11.2026**
(21) Application number: 19180843.5
(22) Date of filing: 18.06.2019
(51) Int. Cl.: G01S 17/931, G01S 17/89, G01S 7/483, G01S 17/87, G01S 7/481

(54) **LIDAR IMAGING APPARATUS FOR A MOTOR VEHICLE**
LIDAR-BILDGEBUNGSVORRICHTUNG FÜR EIN KRAFTFAHRZEUG
APPAREIL D'IMAGERIE LIDAR POUR VÉHICULE À MOTEUR

(43) Date of publication of application: 23.12.2020
(73) Proprietor: Magna Electronics Sweden AB, 447 37 Vårgårda (SE)
(72) Inventor: KÄLLHAMMER, Jan-Erik, 583 30 Linköping (SE); ROYO, Santiago, 08222 Terrassa (ES); BALLESTA, Maria, 08222 Terrassa (ES); RIU, Jordi, 08222 Terrassa (ES)
(74) Representative: Müller Verweyen

(56) References cited:
- EP-A1- 3 428 677
- US-A1- 2012 147 187

## Description

The invention relates to a lidar imaging apparatus for a motor vehicle, and is defined in claim 1.

Such a lidar imaging apparatus is known from EP 3 428 677 A1, which discloses a vision system comprising a light source arranged on an emitting side and adapted to emit a light beam a scanned surface in the environment of the vehicle, at least one DMD arranged on a receiving side comprising an array of mirrors, wherein each mirror is adapted to change the direction of redirected light between a first deflection direction and a second deflection direction, a light sensing device arranged to sense light redirected from the DMD in the first deflection direction, and a detecting device arranged to sense light redirected from the DMD in the second deflection direction, wherein a data processing unit is adapted to process the data provided by the light sensing device and by the light detecting device in a combined manner.

A main aspect of image data processing is feature extraction, i.e. the data processing unit uses algorithms to analyze the obtained images from the environment of the motor vehicle in order to identify and classify possible objects in front of the motor vehicle, such as pedestrians, other vehicles, bicyclists and/or large animals, tracking over time the position of objects or object candidates identified in the captured images, and activating or controlling at least one safety device depending on an estimation performed with respect to a tracked object, for example on an estimated collision probability. Applicated to autonomous driving, it is most important to constantly identify and classify road conditions and object candidates. Such information has to be captured reliably and accurately but is complicated by several environments, including intense sun, fog, rain, etc.

Currently, deep learning algorithms are used for feature extraction. These algorithms are based on the training of multiple neural networks. Such a training is a slow process, which is dependent upon the type of sensor and its configuration. A novel sensor or a different performance due to different environmental circumstances causes the learning process to restart, with subsequent delays in project execution. Such delays are becoming more relevant because the final sensor configuration to be deployed in e.g. an automotive autonomous vehicle is still unknown, with different sensor configurations and their specifications being decided.

EP 3 426 677 A1 discloses a lidar imaging apparatus with the features of the preamble of claim 1.

US 2012/147187 A1 discloses an imaging apparatus having a polarizing camera, where the difference between the degree of horizontal polarization and the degree of vertical polarization is calculated.

The problem underlying the present invention is to provide a lidar imaging apparatus with an improved method for faster evaluation of relevant features, which provides precise sensor information in several environments.

The invention solves this problem with the features of the independent claim 1.

According to the invention, the further photo detector comprises a polarization camera and said electronic processing unit is further adapted to perform feature extraction algorithms in image processing using polarization properties of light gained by said polarization camera. Said polarization image may be acquired in any given wavelength or wavelength band, including VIS, NIR, SWIR and others. Furthermore, said polarization image may be passive (acquired using background light) or active (acquired used continuous or pulsed light emitted from the lidar device.

Polarized imaging is able to distinguish changes in the plane of polarization of light, which, typically, enables to identify features which are not visible in images captured by a conventional camera. The polarization properties may be used for extracting differences in the materials of objects, distinguishing between wet and dry, paint and pavement, etc. Polarization images may be based on detecting intensity after one or more circular polarizers at different positions, in particular in horizontal and vertical positions. The properties to analyze involve changes and/or differences in degree of circular polarization due to differences in the materials present in the captured image and involved in the reflection or the direction of incidence of light on the materials, among other factors. Such differences in images are easy to detect and enable a faster extraction of features in deep learning algorithms. Feature extraction will not only be faster, but also more accurate due to the additional information on type of materials present in the images. This enables to speed up data processing, which brings on a faster learning of the algorithms.

The polarization camera comprises an optical unit which comprises at least one polarizer that is adapted to polarize light, which is directed by the digital micromirror device to the polarization camera. According to the invention, these polarizers involve circular polarizers. It is preferred that at least one beam splitter is provided, which is adapted to split the light directed from the digital micromirror device to the polarization camera into several light beams directed to the photo detector of the polarization camera and each split-up light beam is sent through one of said polarizers. This makes parallel measurements possible which enhance data acquisition speed and therefore feature extraction processing.

In a preferred embodiment, each of said split-up light beams is directed to a corresponding individual photo detector. Therefore, photo sensors with different properties, e.g. different wavelength sensitivity may be used.

Preferably, the electronic processing unit is adapted to fuse image data provided by the lidar detector and the polarization camera to a fused image. In this manner, the invention provides a congruent combination of lidar and polarization imaging. Such combination may be performed off-line or on-line, as the images are acquired. The invention advantageously allows combining lidar imaging with polarization imaging in a combined imaging method. This is particularly useful in light scattering conditions, when environmental circumstances like rain, fog or intense sunlight affect the image quality.

In the following the invention shall be illustrated on the basis of preferred embodiments with reference to the accompanying drawings, wherein:
- Fig. 1: shows a schematic setup of a lidar imaging apparatus;
- Fig. 2: shows a fused image obtained from fusing images from the lidar detector and the further detector;
- Fig. 3: shows a plan view onto the DMD for illustrating a possible scan pattern of the laser beam;
- Fig. 4: schematically shows a comparison of a scanned environment, obtained by unpolarized imaging and obtained by polarization imaging.

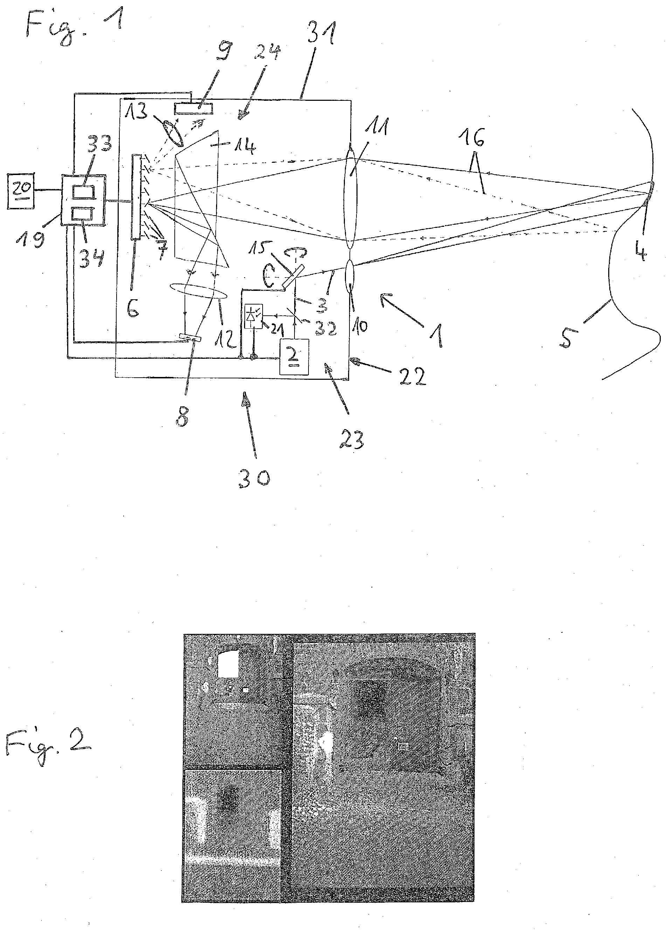

The lidar imaging apparatus 30 is mounted in or to a motor vehicle to capture images of a region in the environment of the motor vehicle, for example a region in front of the motor vehicle. The lidar imaging apparatus 30 comprises an optical section 22 and a data processing unit 19. The optical section 22 comprises a housing 31, an emitting section 23 with a light source 2 and a scanning device 15, and a receiving section 24 with a Digital Micromirror Device (DMD) 6, a lidar detector 8 and a further photo detector 9. In a preferred embodiment shown in Figure 1, the emitting section 23 and the receiving section 24 are arranged in a single optical section 22 in a common housing 31. In other embodiments, the emitting section 23 and the receiving section 24 are separate units each having its own housing.

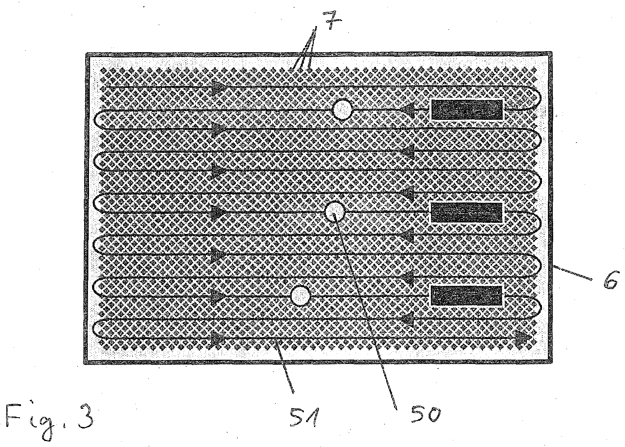

The light source 2, in particular a laser device, generates a pulsed beam 3 of light, in particular pulsed laser radiation. The scanning device 15 is adapted to direct the laser beam 3 through a transparent optical element 10 into the environment of the motor vehicle. The scanning device 15 is adapted to change the direction of the laser beam 3 in two directions perpendicular to the laser beam 3, for example in the horizontal and vertical direction, in order to scan a surface 5 in the vehicle environment in two directions, as controlled by the electronic control unit 19. For example, the scanning device 15 can comprise a mirror rotatable around two perpendicular rotation axes, as shown in Figure 1. Alternatively, two mirrors each rotatable around one axis could be used. Furthermore, a line scan arrangement is not excluded, comprising a mirror rotatable around a, preferably vertical axis, and a line detector array 8. A possible scanning pattern generated by the scanning device 15 is shown in Figure 3, which will be described later. The optical element 10 may be a transparent window, or a lens or lens group, in particular for modifying, for example widening, the laser beam 3. The scanning device 15 may preferably be a MEMS device.

When the light beam 3 emitted by the emitting section 23 hits a surface 5 in the vehicle environment, a laser spot 4 is generated on the surface 5. Light reflected from the surface 5 in the region of and around the laser spot 4 enters through the lens objective 11 into the receiving section 24 of the imaging apparatus 30. The lens objective 11 comprises one or more lenses arranged for focusing an image of the scanned surface 5 in the region around the laser spot 4 onto a spatial light modulator, in particular a digital micromirror device DMD 6.

The DMD 6 comprises a matrix of mirrors 7 which are controllable by the electronic processing unit 19 to change between at least two different positions. In a first position of each mirror 7 (5^{th} mirror 7 from top in the example of Figure 1), the light incident from the lens objective 11 onto the DMD 6 is directed towards and onto a lidar detector 8. A double prism 14, or another suited light deflection element, may be provided for changing the direction of the light outgoing from the DMD 6 in the first direction onto the lidar detector 8 to be explained below. Preferably, a further lens objective 12 having one or more optical lenses is provided in the first or lidar path from the DMD 6, for focusing the light outgoing from the DMD 6 in the first direction onto the lidar detector 8.

In a second position of each mirror (all other mirrors 7 than 5^{th} mirror 7 from top in the example of Figure 1), the light incident from the lens objective 11 onto the DMD 6 is directed towards and onto a further detector 9 to be explained below (shown for the 2^{nd} mirror 7 from the top in Figure 1). A suited light deflection element, not shown in Figure 1, may be provided for changing the direction of the light outgoing from the DMD 6 in the second direction onto the further detector 9.

According to the invention, another optical unit 13 is provided in the second or further path from the DMD 6. The optical unit 13 comprises one or more circular polarizers at different positions, in particular in horizontal and vertical position. It may comprise one or more further beam splitter to divide the light beam in the second path from the DMD 6 into several light beams, said polarizers may be assigned to said divided light beams in order to provide simultaneous measurement of differently polarized light by the further detector 9.

Preferably, the optical unit 13 comprises a lens objective, having one or more optical lenses for focusing the light outgoing from the DMD 6 in the second direction onto the further detector 9. Preferably, the lens optical unit 13 and the imaging sensor 9 are part of a polarization camera. The mirrors 7 of the DMD 6 are controlled to be in the first or second position by the electronic control unit 19.

The lidar detector 8 may be any one of an avalanche photo diode APD, an APD array, a single photon avalanche diode SPAD or an SPAD array, a positive-intrinsic-negative PIN diode or a PIN array, a multi pixel photon counter MPPC diode array, or any other suited photosensitive lidar detector.

The emitting section 23 of the optical unit 31 comprises a beam splitter 32 for splitting a small amount of the laser beam 3 to a photosensitive element 21, like a photodiode. The photosensitive element 21 is provided for defining the start time of a laser pulse. The end time of the same laser pulse can be determined by the data processing unit 19 on the basis of a corresponding signal from the lidar detector 8. The time period from the start time until the end time of a laser pulse defines time-of-flight of the laser pulse. The time-of-flight can be converted into a distance by the data processing unit 19 using the speed of light. After all, the distance information of all mirrors 7 of the DMD 6 provides a depth map of the scanned field of view of the optical section 22.

The further detector 9 preferably is or comprises a polarization camera, which is adapted to receive data from polarized light, like a polarimetric sensor or a combination of a polarimetric sensor and, for example a CCD sensor, a CMOS based sensor, a focal plane array and/or any suited photosensitive area sensor or line sensor. The further detector 9 may also be suited for taking color images, in particular RGB images, or grayscale images in any wavelength, including NIR, SWIR and LWIR.

The electronic control unit 19 is preferably a digital device which is programmed or programmable and preferably comprises a microprocessor, a microcontroller, a digital signal processor (DSP), a System-On-Chip (SoC) device, and/or dedicated hardware device, for example Field Programmable Gate Array (FPGA), an Application Specific Integrated Circuit (ASIC), a Graphics Processing Unit (GPU) or an FPGA and/or ASIC and/or GPU part in a System-On-Chip (SoC) device. The data processing unit 19 is preferably realized in an on-board electronic control unit (ECU). The data processing unit 19 is preferably adapted to receive image data from the lidar detector 8 and the photo detector 9.

As shown in Figure 3, the light reflected from the scanned surface 5 in the region of the laser spot 4 and focussed onto the DMD 6 by the lens objective 11 causes a corresponding laser spot 50 on the DMD 6. Also shown in Figure 3 is the scanning pattern 51 of the laser beam 3. Here, a line scanning pattern 51 is shown for example, where after scanning a line, the laser beam is changed vertically downwards to start the scan of the next line in the opposite direction than in the previous line. Other scan patterns are possible, for example line scans from bottom to top, column scans, etc. It should be noted that the three laser spots 50 visible in Figure 3 correspond to three different times; at each time, only one laser spot 50 is present on the DMD 6. The three dark rectangles on the right in Figure 3 have no meaning and should be ignored. The further detector 9 may be adapted to image essentially the whole field of view of the receiving section 24 at each time, because the number of mirrors 7 set to the first position for directing the laser spot 50 to the lidar detector 8 is small, and all other mirrors 7 can be set to the second position to direct the incoming light to the further detector 9.

In a preferred application, lidar images from the lidar detector 8 and further images from the further detector 9, comprising complementary image information, are fused to result in a fused image providing more image information than the lidar images alone. This is illustrated by Figure 2, showing an image obtained by the further detector 9 (top left in Fig. 2), a depth image obtained by the lidar detector 8 (bottom left in Fig. 2), and a fused image (right in Fig. 2). The data fusion is preferably carried out in the data processing unit 19. The further image can have a different resolution, in particular a higher resolution, than the lidar depth image. Both grey-scale and depth images can be processed, e.g. by interpolation and/or superposition, and a field of view matching can be performed to match the images and achieve the fused image.

The image fusion described above is preferably carried out under normal environmental conditions, like weather and/or light conditions. In this regard, the data processing unit 19 is preferably adapted to determine whether the environmental conditions are normal, or if one or more extraordinary environmental conditions are fulfilled, like fog, rain, snow and so on, or if the lidar imaging is inoperative or low quality for some reasons. In that case, the further image from the further detector 9 may be used in a manner different from the above described data fusion. For example, a depth image could be calculated from the further image, for example by optical flow calculation, and used instead of the lidar depth image. Alternatively, the quality of the lidar depth map could be improved using the further image information from the further detector 9.

Further image and data processing is carried out by corresponding software in the data processing unit 19 on the basis of the image information provided by the lidar detector 8 and/or the further detector 9. The image and data processing in the processing unit 19 may for example comprise identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 20 depending on an estimation performed with respect to a tracked object, for example on an estimated collision probability. The safety device 20 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals. All steps from image data acquisition, depth estimation, data processing to possible activation and/or control of the driver assistance device 20 are performed automatically and continuously during driving in real time. Feature extraction algorithms in image processing may use polarization properties of light.

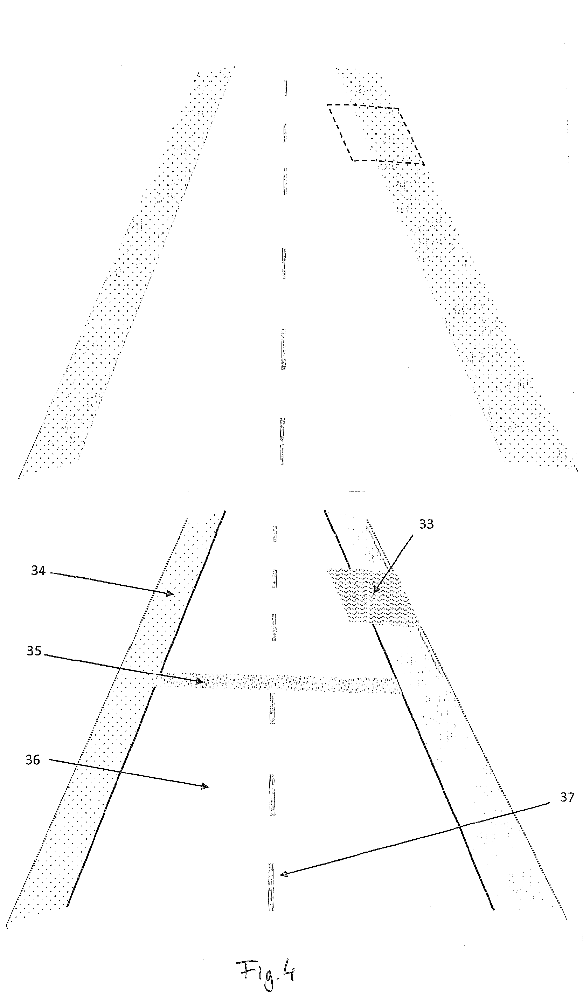

Polarized imaging is able to distinguish changes in the plane of polarization of light, which enables to identify features which are not visible in a conventional camera and therefore enhances classifying possible objects. Polarization properties may be used for seeing differences in the materials of objects, distinguishing between wet and dry surfaces, paint and pavement, etc. These polarization images may be based on detecting intensity of light after one or more circular polarizers at different positions, in particular in horizontal and vertical. The properties to analyse involve changes and/or differences in degree of circular polarization due to differences in the materials present in the image and involved in the reflection. In figure 4 an example is given, showing how polarization imaging improves feature extraction from a scanned environment. On the upper side an image is captured by measuring intensity I0 of unpolarized light. On the lower side polarized light is measured. Here the pictures are scanned with a polarimetric infrared imager. The lower image shows the difference of intensity Ip compared to the unpolarized image. The polarimetric signatures of disturbed 33 and undisturbed soils 34, as well as from a rectangular metal plate 35 and an asphalt road 36 with painted center line road marking 37 are now visible with improved contrast. The dotted lines in the upper image mark the boundary of the disturbed region 33. It can be seen, that the boundary of the asphalt road 36 as well as the disturbed region 33 is highlighted in the polarized image, while in the unpolarized image, the boundaries of the road 36 and the soil 33,34 can hardly be distinguished. Furthermore, the disturbed region 33 is completely not visible in the upper image. The road marking of the center line 37, with paint against asphalt is more clearly seen in the polarized image. The change of material types are quite significant, specially in wet conditions. Also other features can often be more easily distinguished using differences in polarization. Additional information from polarization imaging provides precise information in several environments, including intense sun, fog, rain, etc.

Such an improvement of feature extraction enables to easily separate materials of objects in the scene, supporting the image processing and making the process of learning of the algorithms faster, and more reliable and accurate.

The invention is applicable to collaborative driving, where the system supports the driver or autonomous driving, where the ego vehicle is an autonomous vehicle adapted to drive partly or fully autonomously or automatically, and driving actions of the driver are partially and/or completely replaced or executed by the ego vehicle.

## Claims

1. A lidar imaging apparatus (30) for a motor vehicle, comprising an emitting section (23) adapted to emit a pulsed light beam (3) and to change the direction of the light beam (3) in two dimensions perpendicular to the light beam (3), a receiving section (24) having a lens objective (11), a digital micromirror device (6) comprising a matrix of mirrors (7), a lidar detector (8) and a further photo detector (9), and an electronic processing unit (19),
wherein each mirror (7) of the digital micromirror device (6) is controllable by said electronic processing unit (19) to change at least between a first position where light entering the lidar imaging apparatus (30) through said lens objective (11) is directed on said lidar detector (8), and a second position where light entering the lidar imaging apparatus (30) through said lens objective (11) is directed on said further photo detector (9), wherein said electronic processing unit (19) is adapted to determine the time-of-flight of a laser pulse from said emitting section (23) to said lidar detector (8),
wherein the further photo detector (9) comprises a polarization camera (9),
**characterized in that** said electronic processing unit (19) is further adapted to perform feature extraction algorithms in image processing using polarization properties of light gained by said polarization camera (9),
wherein the polarization camera (9) comprises an optical unit (13) which comprises at least one polarizer that is adapted to polarize light, which is directed by said digital micromirror device (6) to said polarization camera (9),
wherein said at least one polarizer is a circular polarizer, wherein the properties to analyze comprise changes and/or differences in degree of circular polarization.

2. The lidar imaging apparatus according to claim 1, **characterized in that** at least one beam splitter is provided, which is adapted to split the light directed from the digital micromirror device (6) to the polarization camera (9) into several light beams directed to the photo detector of the polarization camera (9) and each split-up light beam is sent through one of said polarizers.

3. The lidar imaging apparatus according to claim 2, **characterized in that** each of said split-up light beams is directed to a corresponding individual photo detector.

4. The lidar imaging apparatus as claimed in any of the preceding claims, **characterized in that** said electronic processing unit (19) is adapted to fuse image data provided by said lidar detector (8) and said polarization camera (9) into a fused image.

5. The lidar imaging apparatus as claimed in any of the preceding claims, **characterized in that** said polarization camera (9) comprises a photodiode or a photodiode array.

## Patentansprüche

1. Eine Lidarbildgebungsvorrichtung (30) für ein Kraftfahrzeug, wobei die Lidarbildgebungsvorrichtung einen Emissionsabschnitt (23), der dafür ausgelegt ist, einen gepulsten Lichtstrahl (3) zu emittieren und die Richtung des Lichtstrahls (3) in zwei Dimensionen senkrecht zu dem Lichtstrahl (3) zu ändern, einen Empfangsabschnitt (24), der ein Linsenobjektiv (11) aufweist, eine digitale Mikrospiegelvorrichtung (6), die eine Matrix von Spiegeln (7) umfasst, einen Lidardetektor (8) und einen weiteren Fotodetektor (9) und eine elektronische Verarbeitungseinheit (19) umfasst,
wobei jeder Spiegel (7) der digitalen Mikrospiegelvorrichtung (6) durch die elektronische Verarbeitungseinheit (19) zum Wechseln zwischen wenigstens einer ersten Stellung, in der Licht, das durch das Linsenobjektiv (11) in die Lidarbildgebungsvorrichtung (30) eintritt, auf den Lidardetektor (8) gelenkt wird, und einer zweiten Stellung, in der Licht, das durch das Linsenobjektiv (11) in die Lidarbildgebungsvorrichtung (30) eintritt, auf den weiteren Fotodetektor (9) gelenkt wird, steuerbar ist, wobei die elektronische Verarbeitungseinheit (19) dafür ausgelegt ist, die Laufzeit eines Laserimpulses von dem Emissionsabschnitt (23) zu dem Lidardetektor (8) zu bestimmen,
wobei der weitere Fotodetektor (9) eine Polarisationskamera (9) umfasst,
**dadurch gekennzeichnet, dass** die elektronische Verarbeitungseinheit (19) ferner dafür ausgelegt ist, in der Bildverarbeitung unter Verwendung von Polarisationseigenschaften des durch die Polarisationskamera (9) gewonnen Lichts einen Merkmalsextraktionsalgorithmus auszuführen, wobei die Polarisationskamera (9) eine Optikeinheit (13) umfasst, die wenigstens einen Polarisator, der dafür ausgelegt ist, Licht, das durch die digitale Mikrospiegelvorrichtung (6) zu der Polarisationskamera (9) gelenkt wird, zu polarisieren, umfasst,
wobei der wenigstens eine Polarisator ein Zirkularpolarisator ist, wobei die zu analysierenden Eigenschaften Änderungen und/oder Differenzen des Grads der Zirkularpolarisation umfassen.

2. Die Lidarbildgebungsvorrichtung nach Anspruch 1, **dadurch gekennzeichnet, dass** wenigstens ein Strahlteiler vorgesehen ist, der dafür ausgelegt ist, das von der digitalen Mikrospiegelvorrichtung (6) zu der Polarisationskamera (9) gelenkte Licht in mehrere Lichtstrahlen, die zu dem Fotodetektor der Polarisationskamera (9) gelenkt werden, zu teilen, und wobei jeder aufgeteilte Lichtstrahl durch einen der Polarisatoren geschickt wird.

3. Die Lidarbildgebungsvorrichtung nach Anspruch 2, **dadurch gekennzeichnet, dass** jeder der aufgeteilten Lichtstrahlen zu einem entsprechenden einzelnen Fotodetektor gelenkt wird.

4. Die Lidarbildgebungsvorrichtung nach einem der vorhergehenden Ansprüche, **dadurch gekennzeichnet, dass** die elektronische Verarbeitungseinheit (19) zum Verschmelzen von Bilddaten, die durch den Lidardetektor (8) und durch die Polarisationskamera (9) bereitgestellt werden, zu einem verschmolzenen Bild ausgelegt ist.

5. Die Lidarbildgebungsvorrichtung nach einem der vorhergehenden Ansprüche, **dadurch gekennzeichnet, dass** die Polarisationskamera (9) eine Fotodiode oder eine Fotodiodenanordnung umfasst.

## Revendications

1. Un appareil d'imagerie lidar (30) destiné à un véhicule à moteur, comprenant une section d'émission (23) adaptée à émettre un faisceau lumineux pulsé (3) et à changer la direction du faisceau lumineux (3) dans deux dimensions perpendiculaires au faisceau lumineux (3), une section de réception (24) comportant un objectif à lentilles (11), un dispositif à micromiroirs numériques (6) comprenant une matrice de miroirs (7), un détecteur lidar (8), et un autre photodétecteur (9), ainsi qu'une unité de traitement électronique (19),
dans lequel chaque miroir (7) du dispositif à micromiroirs numériques (6) peut être commandé par ladite unité de traitement électronique (19) pour basculer au moins entre une première position dans laquelle la lumière pénétrant dans l'appareil d'imagerie lidar (30) par ledit objectif à lentilles (11) est dirigée vers ledit détecteur lidar (8), et une deuxième position dans laquelle la lumière pénétrant dans l'appareil d'imagerie lidar (30) par ledit objectif à lentilles (11) est dirigée vers ledit autre photodétecteur (9), ladite unité de traitement électronique (19) étant adaptée à déterminer le temps de vol d'une impulsion laser depuis ladite section d'émission (23) jusqu'audit détecteur lidar (8),
dans lequel l'autre photodétecteur (9) comprend une caméra de polarisation (9), **caractérisé en ce que** ladite unité de traitement électronique (19) est en outre adaptée à exécuter des algorithmes d'extraction de caractéristiques dans le traitement d'images en utilisant les propriétés de polarisation de la lumière captée par ladite caméra de polarisation (9),
dans lequel la caméra de polarisation (9) comprend une unité optique (13) qui comprend au moins un polariseur adapté à polariser la lumière dirigée par ledit dispositif à micromiroirs numériques (6) vers ladite caméra de polarisation (9), dans lequel ledit au moins un polariseur est un polariseur circulaire, les propriétés à analyser comprenant des changements et/ou des différences de degré de polarisation circulaire.

2. L'appareil d'imagerie lidar selon la revendication 1, **caractérisé en ce qu'**il est prévu au moins un diviseur de faisceau, adapté à diviser la lumière dirigée depuis le dispositif à micromiroirs numériques (6) vers la caméra de polarisation (9) en plusieurs faisceaux lumineux dirigés vers le photodétecteur de la caméra de polarisation (9), et **en ce que** chaque faisceau lumineux divisé est envoyé à travers l'un desdits polariseurs.

3. L'appareil d'imagerie lidar selon la revendication 2, **caractérisé en ce que** chacun desdits faisceaux lumineux divisés est dirigé vers un photodétecteur individuel correspondant.

4. L'appareil d'imagerie lidar selon l'une quelconque des revendications précédentes, **caractérisé en ce que** ladite unité de traitement électronique (19) est adaptée à fusionner les données d'image fournies par ledit détecteur lidar (8) et ladite caméra de polarisation (9) en une image fusionnée.

5. L'appareil d'imagerie lidar selon l'une quelconque des revendications précédentes, **caractérisé en ce que** ladite caméra de polarisation (9) comprend une photodiode ou un réseau de photodiodes.
